Europäisches Patentamt

**European Patent Office**

**Office européen des brevets**

(19)

(11) Veröffentlichungsnummer: **0 172 359**
**B1**

(12) **EUROPÄISCHE PATENTSCHRIFT**

(45) Veröffentlichungstag der Patentschrift:
18.05.88

(51) Int. Cl.⁴: **B 01 J 2/20**

(21) Anmeldenummer: **85107861.8**

(22) Anmeldetag: **25.06.85**

(54) **Pelletpresse.**

(30) Priorität: **04.07.84 CH 3220/84**

(43) Veröffentlichungstag der Anmeldung:
**26.02.86 Patentblatt 86/9**

(45) Bekanntmachung des Hinweises auf die Patenterteilung:
**18.05.88 Patentblatt 88/20**

(84) Benannte Vertragsstaaten:
**AT BE CH DE FR GB IT LI NL SE**

(56) Entgegenhaltungen:
**CH-A-623 267**
**DE-A-2 600 648**
**DE-A-3 121 613**
**US-A-2 764 951**
**US-A-2 798 444**
**US-A-2 906 038**

(73) Patentinhaber: **Gebrüder Bühler AG, CH- 9240 Uzwil (CH)**

(72) Erfinder: **Schaffner, Hanspeter, Armetsholzstrasse 2, CH- 9244 Niederuzwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 172 359 B1

## Beschreibung

Die Erfindung bezieht sich auf eine Pelletpresse nach dem Oberbegriff des Anspruchs 1.

In herkömmlichen Pelletpressen dieser Art (vgl. beispielsweise die DE-OS-3 121 613 oder die US-PSen-2 764 951 bzw. 2 798 444 oder 2 908 038) wird das zu pelletisierende Material über gebogene bzw. gewundene Leitschaufeln unmittelbar den Pressrollen zugeführt. Dabei ist es bekannt, mindestens eine Pressrolle, gegebenenfalls aber auch drei solcher Rollen zu verwenden. Die Leitschaufeln sind hierbei so angeordnet, dass ihr den Pressrollen zugewandtes Ende knapp vor diesen liegt. Hierfür waren bisher zwei Arten von Lösungen vorgesehen: entweder erstreckte sich die jeweilige Leitschaufel quer durch die gesamte Matrizenform (vgl. US-PS-2 798 444) oder man versuchte, die Leitschaufeln so weit wie möglich ausserhalb der Form anzuordnen und sie nur über einen Teil der axialen Breite der Matrizenform in deren Inneres ragen zu lassen. Im ersten Falle war damit der Nachteil verbunden, dass die Leitschaufeln in dem sowieso beengten Raum innerhalb der Matrizenform untergebracht werden mussten, wobei die Gleichmässigkeit der Zufuhr des zu pelletisierenden Materiales gegenüber der zweitgenannten Konstruktion zwar verbessert, keineswegs jedoch gesichert war; im wesentlichen war die Gleichmässigkeit sehr stark von der Liefermenge der vorgeschalteten Zuführeinrichtung abhängig.

Man nahm daher lieber eine grössere ungleichmässigkeit in Kauf, wenn nur die Leitschaufeln grösstenteils ausserhalb der Matrizenform montiert werden konnten. Da aber die Leitschaufeln gerade der Vergleichmässigung der Zufuhr dienen sollen, brachte just diese Massnahme nicht den gewünschten Erfolg. Es wurde daher in der US-PS-3 723 042 bereits der Vorschlag gemacht, die Leitschaufeln unmittelbar vor den Pressrollen über deren gesamte axiale Breite anzuordnen, die Pressrollen jedoch an der Aussenseite der Form abrollen zu lassen. Dies führt allerdings einerseits zu einer ungünstigen Kräfteverteilung bezüglich der Pressrollen und deren Lagerung, andererseits ergab sich eine verhältnismässig komplizierte Form der Leitschaufeln und schliesslich war die Anordnung überaus platzaufwendig und kostspielig.

In allen bisherigen Pressen ergab sich zusätzlich das Problem, dass beim Abschalten des Antriebes für die Matrizenform das in der Zufuhrleitung, einer gesonderten Zufuhrkammer, meist aber im an der drehbaren Form befestigten Matrizendeckel verbliebenes Material unkontrolliert an die Innenwand der Matrizenform gelangen konnte und diese verschmutzte oder verklebte. So ergaben sich Schwierigkeiten beim erneuten Anfahren bzw. war die Reinigung der Matrizenform erschwert.

Der Erfindung liegt die Aufgabe zugrunde, eine Pelletpresse der eingangs genannten Art baulich einfach unkompliziert auszubilden und dennoch während des Betriebes für eine gleichmässige Materialzufuhr Sorge zu tragen, wogegen bei Stillstand eine Verschmutzung vermieden werden soll.

Erfindungsgemäss ergibt sich die Lösung durch die kennzeichnenden Merkmale des Anspruches 1. Dadurch kann einer Leitschaufel leicht auch eine weitere Funktion zugeordnet werden, die bei den bekannten Konstruktionen nicht erfüllt werden konnte. Da die Zufuhrkammer bzw. der Matrizendeckel hier eine besondere Funktion bei der Mitnahme des Materiales ausübt, kann es vorteilhaft sein, wenn die Zufuhrkammer bzw. der Matrizendeckel mit Mitnahmeeinrichtungen, z. B. mit mitdrehenden Schaufeln begrenzter radialer Erstreckung, Bechern od. dgl., versehen ist.

Gemäss einer weiteren Ausgestaltung geht die Erfindung von der Erkenntnis aus, dass gerade beim Pelletpressen mit drehender Matrize eine Kraft auftritt, die zur Vergleichmässigung der Materialzufuhr beizutragen vermag, nämlich die Fliehkraft. Um diese für diesen Zweck auszunützen, sind vorzugsweise die Merkmale des Anspruches 2 vorgesehen. Durch den so geschaffenen Abstand wird das zugeführte Material verhältnismässig früh vor der Pressrolle auf die Innenseite der Matrizenform gebracht und kann sich aufgrund des vorhandenen Freiraumes, vorzugsweise ausschliesslich unter Wirkung der Fliehkraft, gewünschtenfalls aber auch mit Hilfe zusätzlicher Verteileinrichtungen, über die Innenflächen verteilen, bevor es mit Hilfe der Pressrolle durch die Matrizenform hindurchgepresst wird.

Besonders bevorzugt ist es, wenn die Leitschaufel wenigstens 90° vor der Pressrolle, insbesondere unmittelbar nach der vorhergehenden Pressrolle gesehen in Drehrichtung der Matrizenform - angeordnet ist. Bei einer solchen Konstruktion ergibt sich dann ein besonders grosser Freiraum zwischen Leitschaufel und zugehöriger Pressrolle, wobei im Falle einer einzigen Pressrolle "die vorhergehende Pressrolle" ein und dieselbe ist.

Es wurde oben bereits erwähnt, dass es bekannt ist, die Leitschaufeln möglichst ausserhalb der Matrizenform anzuordnen bzw. sie nur im geringen Masse in den Matrizeninnenraum ragen zu lassen. Gerade aber im Zusammenhang mit der beabsichtigten Ausnützung der Fliehkraft für die Verteilung des zugeführten Materiales ist es von Vorteil, wenn sich die Leitschaufeln nur bis maximal zu einem Drittel in Achsrichtung der Matrizenform in diese hinein erstreckt, gegebenenfalls sogar ausserhalb derselben an sie anschliesst. Dadurch kann die Fliehkraft ihre Wirkung ungestört von in das Innere der Matrizenform ragenden Teilen ausüben.

Gerade wegen der auszunützenden Fliehkraftwirkung ist es zweckmässig, wenn die Matrizenform eine entsprechende Umfangsgeschwindigkeit besitzt, weil dann zusätzliche Verteileinrichtungen im Inneren der Matrize entfallen können. Deshalb ist es vorteilhaft, wenn die Matrizenform - gemessen an ihrer Innenseite - eine Umfangsgeschwindigkeit von wenigstens 3 m/sec., vorzugsweise mindestens 5 m/sec., insbesondere etwa 7 m/sec, besitzt.

Gemäss der obigen Erläuterungen wird also das zu pelletisierende Material mit Hilfe der schrägen Leitschaufeln zugeführt und soll sich dann insbesondere unter Fliehkraftwirkung über die Innenwandfläche der Matrizenform verteilen. Unter diesen Voraussetzungen ist aber der Winkel, und zwar insbesondere der Mindestwinkel von Bedeutung, den die Ebene der Leitschaufel zur Mittelebene der Matrizenform einnimmt. Bisher hat man den Leitschaufeln stets eine verwundene Form gegeben und gemeint, es liesse sich damit eine Verbesserung der Zuführbedingungen erzielen. Falls eine solche verwundene Form benutzt wird, so sei mit dem Begriffe "Ebene der Leitschaufel" eine mittlere Tangentialebene verstanden, doch zeigte es sich in der Praxis, dass durch die vorgeschlagene Ausbildung einfache und ungekrümmte Leitschaufeln mit ebenen Flächen verwendet werden können, so dass ihre Herstellung erleichtert ist. Dabei ist es von Vorteil, wenn der Winkel der Ebene der Leitschaufel zur Mittelebene der Matrizenform zwischen 20° und 40°, vorzugsweise zwischen 25° und 30°, insbesondere um 27°, beträgt.

Da Pelletpressen im allgemeinen für verschiedene Materialien und mit verschiedenen Matrizenformen unterschiedlichen Durchmessers betreibbar sein sollen, so ist es vorteilhaft, wenn eine Anpassung an die verschiedenen Bedingungen möglich ist. Daher ist es zweckmässig den Winkel der Ebene der Leitschaufel zur Mittelebene der Matrizenform mit Hilfe einer Winkeljustiereinrichtung einstellbar, wobei vorzugsweise eine Begrenzungseinrichtung für wenigstens eine Einstellgrenze, insbesondere wenigstens ein Begrenzungsanschlag, vorgesehen ist. Als Begrenzungseinrichtung mag im einfachsten Falle eine Begrenzungsmarke (Kerbe, Skalenstrich od.dgl.) genügen, doch ist es selbstverständlich, ein Begrenzungsanschlag zur Vermeidung von Irrtümern vorzuziehen.

Versuche haben ergeben, dass ein Optimum für die Vergleichmässigung der Materialzufuhr bei bestimmten Verhältnissen des in Grad gemessenen Winkels der Ebene der Leitschaufel zur Mittelebene der Matrizenform und der Umfangsgeschwindigkeit der Matrizenform erzielbar ist. Es ist deshalb bevorzugt, dass das Verhältnis des Winkels - gemessen in Grad - den die Ebene der Leitschaufel mit der Mittelebene der Matrizenform einschliesst, zur Umfangsgeschwindigkeit der Matrizenform in m/sec. an ihrer Innenseite zwischen 3,4 : 1 und 4,4 : 1, vorzugsweise zwischen 3,8 : 1 und 4,0 :1, insbesondere bei 3,86 : 1, liegt.

Um aber einerseits Platz für die im unteren Bereich der mit ihrer Mittelebene aufrechtstehenden Matrizenform angeordnete Leitschaufel zu schaffen und anderseits den gewünschten Freiraum zwischen Leitschaufel und Pressrolle zu gewährleisten, ist die Ausbildung vorzugsweise so getroffen, dass die bzw. eine Pressrolle bezüglich einer Vertikalebene durch die Matrizenachse in einem spitzen Winkel vorzugsweise von etwa 30° bis 60°, insbesondere von annähernd 45°, angeordnet ist.

Weitere Einzelheiten ergeben sich anhand der nachfolgenden Beschreibung eines in der Zeichnung schematisch dargestellten Ausführungsbeispieles. Es zeigen:

Fig. 1 einen Vertikalschnitt durch eine Pelletpresse; gemäss der Linie I-I der Fig. 2;

Fig. 2 eine Seitenansicht der Matrizenform, der Pressrollen und der Leitschaufeln; und

Fig. 3 einen Schnitt nach der Linie III-III der Fig. 2, wobei unwesentliche Teile weggelassen sind.

Eine Pelletpresse 1 weist an einem im einzelnen nicht näher dargestellten Ständer 2 eine mit Hilfe von Fixierschrauben 3 befestigte Achse 4 auf, an der ein Drehteil 5 gelagert ist.

Mit dem Drehteil 5 ist ein Riemenrad 6 für den Antrieb des Drehteiles 5 in nicht dargestellter, an sich bekannter Weise verbunden, z. B. durch Aufkeilen, Aufschrumpfen oder mit Hilfe von Befestigungsschrauben.

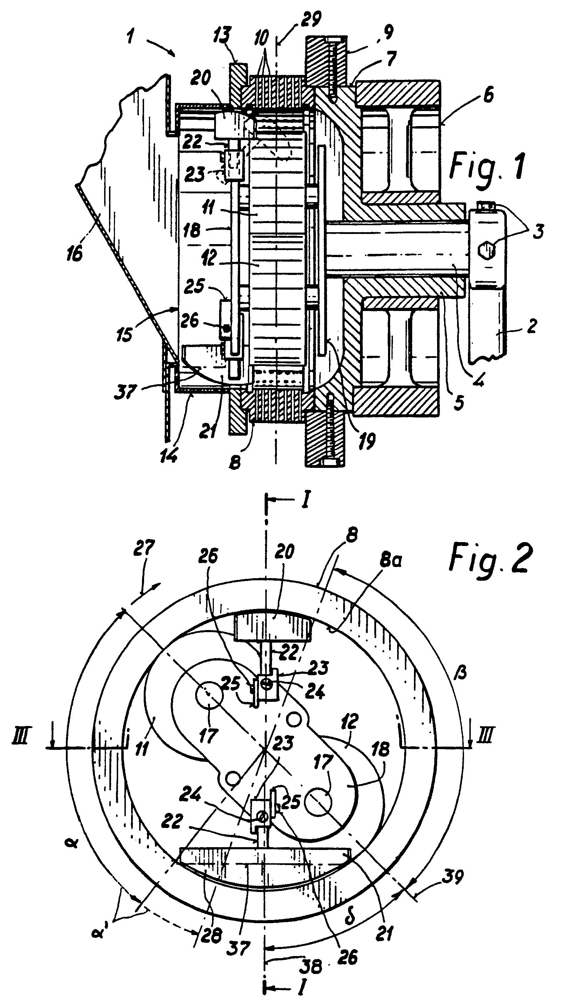

An einer Seite weist der Drehteil 5 einen Hohlflansch 7 auf, an dem eine Matrizenform 8 mit Hilfe eines Klemmringes 9 oder einer anderen Befestigungsart zu gemeinsamer Drehung angeschlossen ist. In bekannter Weise besitzt die Matrizenform 8 über ihren Umfang verteilte Löcher 10, durch die das zu pelletisierende Material zur Erzeugung der erwünschten Pellets hindurchgedrückt wird. Zu diesem Zwecke sind im Inneren der Matrizenform 8 zwei, besonders aus Fig. 2 ersichtliche, später noch im einzelnen noch beschriebene Pressrollen 11, 12 vorgesehen.

Über einen Befestigungsring 13 ist ein Matrizendeckel 14 an der Matrizenform 8 befestigt und dreht sich daher bei Antrieb des Rades 6 über einen nicht dargestellten Motor mit dieser. Der Matrizendeckel 14 besitzt eine Einfüllöffnung 15, in die ein Einfülltrichter 16 in bekannter Weise ragt.

Die Pressrollen 11, 12 sind jeweils an einer Achse 17 (Fig. 2) gelagert, wobei die Achsen 17 von zwei Platten 18, 19 gehalten sind. Die Platte 19 ist mit der fixierten Achse 4 starr verbunden. Die bisher beschriebenen Teile sind herkömmlicher Art und können in bekannter Weise beliebig ausgebildet sein; beispielsweise können die Pressrollen 11, 12 an ihrem Umfange gerieffelt sein.

Jeder der beiden Pressrollen 11, 12 ist eine Leitschaufel 20 bzw. 21 (die letztere ist in Fig. 1 ungeschnitten dargestellt zugeordnet. Die Leitschaufeln 20, 21, sind mit Stangen 22 (Fig. 2) verbunden, die in an der Platte 18 befestigten Haltern 23 stecken und dort mit Hilfe je einer Klemmschraube 24 der Höhe nach justierbar befestigt sind. Die Befestigung der beiden Halter 23 an der Platte 18 erfolgt zweckmässig über an der Platte 18 angeschweissten Wangen 25, wobei der Azimutwinkel, den die Leitschaufeln 20, 21 mit ihrer radial äusseren Kante gegenüber der Innenwand 8a der Matrizenform 8 einnehmen mit Hilfe, eine Klemmschraube 26 in der jeweils gewünschten Lage (vgl. die strichlierte Position der Schaufel 20 in Fig. 1) befestigbar ist.

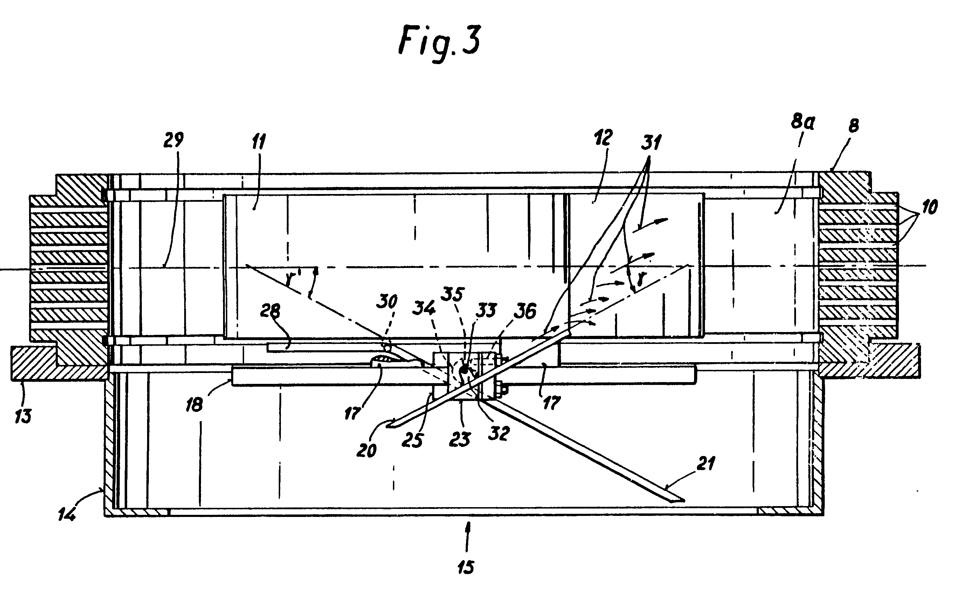

Wie besonders aus den Figuren 2 und 3 ersichtlich ist, ist die das zu pelletisierende Material zur Pressrolle 11 lenkende untere Leitschaufel 21 bezogen auf die durch einen Pfeil 27 (Fig. 2) angedeutete Drehrichtung der Matrizenform 8 relativ weit vor dieser Pressrolle 11 angeordnet. Dabei zeigt Fig. 3, dass die Leitschaufel 21 an ihrem der Matrizenform 8 zugewandten Ende eine Verlängerung 28 besitzt, die im wesentlichen parallel zur strich-punktiert angedeuteten Mittelebene 29 der Matrizenform 8 verläuft. Diese Verlängerung 28 ist von der eigentlichen Leitschaufel 21 abgewinkelt, wobei gewünschtenfalls der Grad der Abwinkelung einstellbar ist, zu welchem Zweck eine aus Fig. 3 ersichtliche Achse 30 vorgesehen sein mag. Der Zweck dieser Verlängerung 28 soll später erläutert werden. Jedenfalls ist aus Fig. 2 ersichtlich, dass das vordere Ende der Verlängerung 28 um einen Winkel $\alpha$ versetzt vor der Pressrolle 11 liegt bzw. die Vorderkante der eigentlichen Leitschaufel 21 am Übergang zur Verlängerung 28 um einen Winkel $\alpha'$ versetzt vor der Pressrolle 11 liegt. Dieser Winkel $\alpha'$, zweckmässig auch der Winkel $\alpha$, soll mindestens 45° betragen, ist aber bei der dargestellten Anordnung wesentlich grösser, zumal die Leitschaufel 21 ersichtlich unmittelbar nach der Pressrolle 12 angeordnet ist, die - gesehen in Drehrichtung des Pfeiles 27 - vor der Pressrolle 11 liegt.

Ähnlich sind die Verhältnisse zwischen der Leitschaufel 20 und der zugehörigen Pressrolle 12. Die der Pressrolle 12 (vgl. Fig. 2) bzw. der Matrizenform 8 (vgl. Fig. 3) zugewandte Vorderkante der Leitschaufel 20 liegt von jenem Punkt, in dem die Pressrolle 12 an der Innenwandfläche 8a der Natrizenform 8 anliegt, in einem Winkelabstand $\beta$ (Fig. 2), der mindestens 45° betragen soll, bei der dargestellten Ausführungsform jedoch ebenfalls wesentlich grösser ist, da die Leitschaufel 20 relativ knapp nach der der Pressrolle 12 vorhergehenden Pressrolle 11 angeordnet ist.

Im Betrieb der Pelletpresse 1, d. h. bei angetriebener, sich im Sinne des Pfeiles 27 (Fig. 2) drehender Matrizenform 8, wird das über den ortsfesten Einfülltrichter 16 zugeführte zu pelletisierende Material von dem sich mitdrehenden Matrizendeckel 14 mitgenommen. Gewünschtenfalls kann der Matrizendeckel 14 zur besseren Mitnahme mit Vertiefungen versehen sein, die von Zellenradwänden begrenzt sind. Diese Art der Zuführung des Materials ist hier nur beispielshalber erläutert, und es wurde bereits vorgeschlagen, das Material von der Antriebsseite her, d. h. die Seite des Flansches 7 über eine Zufuhrkammer zuzuführen, in der beispielsweise ein Mischer angeordnet ist. In einem solchen Falle wären selbstverständlich die Leitschaufeln 20, 21 an der dem Drehteil 5 und seinem Flansch 7 zugewandten Seite, z. B. an der Platte 19 montiert.

Die Mitnahme des zugeführten Materiales durch den Matrizendeckel 14 erfolgt je nach Art des Materiales vorwiegend unter dem Einfluss der Fliehkraft bzw. unter dem Einfluss einer Adhäsion, falls das Material klebrig ist. Auf diese Weise wird das Material zunächst an der sich über die gesamte axiale Breite des Matrizendeckels erstreckenden Leitschaufel 21 und ihrer Verlängerung 28 vorbeitransportiert und an der Oberseite durch die nur über einen Teil der axialen Breite des Matrizendeckels 14 sich erstreckende Leitschaufel 20 (vgl. Fig. 1, 3) abgenommen. Das so von der Leitschaufel 20 abgestreifte Material wird unter dem Drucke nachdringenden Materiales gegen die Innenwand 8a der Matrizenform 8 geleitet, wobei die durch die Drehung der Matrizenform 8 entwickelte Zentrifugalkraft, insbesondere bei breiiger Konsistenz des Materiales (z. B. zur Herstellung von Futterpellets), dieses über die Innenwand 8a verteilt. Dieser Vorgang ist in Fig. 3 durch Pfeile 31 angedeutet. Aus dem Verlaufe der Pfeile 31 ist auch ersichtlich, warum es erforderlich ist, bei Ausnützung der Zentrifugalkraft zur Vergleichmässigung der Materialschicht auf der Innenwand 8a die Leitschaufeln 20, 21 jeweils in einem Winkelabstand $\alpha'$ bzw. $\beta$ (Fig. 2) vor den zugeordneten Pressrollen 11, 12 anzuordnen.

Es bedarf eben eines gewissen Weges bzw. Zeit bis die Vergleichmässigungswirkung erreicht ist. Es wurde gefunden, dass hierfür zumindest 45° ausreichend sein mögen, dass aber selbstverständlich die Vergleichmässigung umso grösser ist, je grösser der Winkel $\alpha'$ bzw. $\beta$ gewählt ist. Der grösstmögliche Winkel $\alpha'$ bzw. $\beta$ ergibt sich jedenfalls dann, wenn die jeweilige Leitschaufel 20, 21 knapp hinter der vorhergehenden Pressrolle 12 bzw. 11 (gesehen im Gegensinne zum Pfeile 27 der Fig. 2) angeordnet ist.

Aus dem Obigen ist aber auch ersichtlich, dass die Grösse der Fliehkraft an der Innenwand 8a von deren Umfangsgeschwindigkeit abhängig ist. Hierbei sind nach oben zu keine Grenzen gesetzt, weil ja mit steigender Umfangsgeschwindigkeit auch die Fliehkraft und deren Verteilwirkung zunimmt; doch soll die Umfangsgeschwindigkeit 3 m/sec, vorzugsweise 5 m/sec, nicht unterschreiten. Eine Umfangsgeschwindigkeit von 7 m/sec führte in praktischen Versuchen zu guten Ergebnissen.

Aus den Pfeilen 31 der Fig. 3 ist aber auch ersichtlich, dass die richtige Einstellung des Winkels $\gamma$ von Bedeutung ist, den die Ebene der Leitschaufel 20 zur Mittelebene 29 der Matrizenform 8 einnimmt. In bekannten Konstruktionen sind die unmittelbar vor den Pressrollen angeordneten Leitschaufeln gekrümmt bzw. verwunden ausgebildet, was zu einer besseren Verteilung des zugeführten Materials führen sollte. Hingegen ist besonders aus Fig. 3 deutlich ersichtlich, dass bei der vorgeschlagenen Anordnung der Leitschaufeln 20, 21 bzw. bei Ausnützung der Fliehkraft für die Verteilung des Materiales die Leitschaufeln 20, 21 eben und damit einfacher ausgebildet sein können. Falls jedoch aus irgend welchen Gründen gekrümmte bzw. verwundene Leitschaufeln verwendet werden, so entspricht der Winkel $\gamma$ demjenigen Winkel, den eine mittlere Tangentialebene mit der Mittelebene 29 der Matrizenform 8 einschliesst. Je nach Umfangsgeschwindigkeit der Innenfläche 8a und Art des zugeführten Materiales soll der Winkel $\gamma$ - bzw. im Falle der Leitschaufel 21 der Winkel $\gamma'$- zweckmässig zwischen 20° und 40°, vorzugsweise zwischen 25° und 30° betragen. In der Anwendung zur Herstellung von Futterpellets hat sich ein Winkel von etwa 27° ( ± 1° je nach Materialzusammensetzung) als besonders günstig erwiesen.

Es wurde oben der Winkel $\gamma'$ erwähnt, den die Ebene der Leitschaufel 21 mit der Mittelebene 29 einschliesst. Hierfür gilt analog das oben Gesagte. Hierbei sei darauf hingewiesen, dass ein Teil des vom Matrizendeckel 14 mitgenommenen Materiales von der relativ kurzen Leitschaufel abgestreift wurde, das verbleibende Material sich unter Fliehkraftwirkung wiederum verteilt und bei weiterer Drehung des Matrizendeckels 14 schliesslich von der Leitschaufel 21 abgestreift wird, die sich über die gesamte axiale Breite des Matrizendeckels 14 erstreckt (vgl. Fig. 1, 3). Da die Winkelabstände $\alpha'$ und $\beta$ (Fig. 2) keineswegs gleich gross sein müssen, kann es sich als zweckmässig erweisen, auch die Winkel $\gamma$ und $\gamma'$ unterschiedlich zu gestalten.

Es wurde bereits erwähnt, dass die Winkel $\gamma$ und $\gamma'$ u. a. von der Art des zu pelletisierenden Materiales abhängig sind. Deshalb kann es erwünscht sein, bei Änderung des Materiales auch eine Winkeleinstellung vorzunehmen. Zu diesem Zweck mag eine Winkeljustiereinrichtung vorgesehen sein, wie sie aus Fig. 3 ersichtlich ist. Die Leitschaufel 20 sitzt dabei mit Lagerwangen 32 (nur eine ist sichtbar) an einer Justierwelle 33 und ist mittels einer nicht dargestellten Klemmschraube in jeder beliebigen Stellung fixierbar. Da, wie oben erwähnt, der Verstellbereich für den Winkel $\gamma$ zweckmässig zwischen 20° und 40° liegt, kann mit der Verstellwelle 33 ein Drehkörper 34 mit einem Ausschnitt 35 verbunden sein, in den eine Anschlagschraube 36 ragt. Die radialen Begrenzungswände dieses Ausschnittes 35 bilden dann die Gegenanschläge zur Schraube 36, wodurch eine Verstellung auf den Bereich zwischen 20° und 40° begrenzt ist. Dadurch werden einerseits Irrtümer vermieden, andererseits kann selbst bei einer Lockerung der festgeklemmten Leitschaufeln diese sich nicht beliebig verdrehen.

Es versteht sich, dass die Winkeljustiereinrichtung 33 - 36 gewünschtenfalls auch anders ausgebildet sein kann, wobei gegebenenfalls Rasten für mehrere unterschiedliche Winkellagen vorgesehen sein mögen. Es ist auch denkbar, die Verstelleinrichtung so auszubilden, dass eine Feineinstellung durch Drehen einer Justierschraube möglich ist.

Eine analoge Winkeljustiereinrichtung mag für die untere Leitschaufel 21 vorgesehen sein, wobei eine Verschwenkung des Fortsatzes 28 aus seiner Parallelität zur Mittelebene 29 nicht unbedingt nachteilig sein muss, gegebenenfalls aber auch eine Korrektur der Abwinkelung an der erwähnten Achse 30 erfolgen kann. Dabei mag es erwünscht sein, an dem der Einlassöffnung 15 zugekehrten Ende der Leitschaufel 21 elastische Dichtungseinrichtungen vorzusehen, um einen Abschluss gegen die Deckelwand auch bei Verstellung des Winkels $\gamma'$ stets zu gewährleisten.

Wird der Antrieb der Pelletpresse 1 abgestellt, so fliesst das bei der Drehung des Matrizendeckels 14 mitgenommene Material nach unten bzw. lässt sich nicht vermeiden, dass aus dem Einfülltrichter 16 noch eine gewisse Materialmenge nachströmt. Es ergibt sich damit bei Stillstand der Pelletpresse 1 ein Materialrest bzw. -sumpf, der erfahrungsgemäss bis zu einem Niveau reicht, das in den Figuren 1 und 2 durch eine strichpunktierte Linie 37 angedeutet ist. Bei herkömmlichen Pelletpressen ergiesst sich dieses restliche Material bis auf die Innenwandfläche 8a der Matrizenform 8, wo es die Löcher 10 verklebt und bei längerem Stillstand zu allem Überfluss noch aushärtet. Dadurch wird die Wartung und Reinigung äusserst erschwert. Um diesem Übel abzuhelfen, ist die Leitschaufel 21 an der Unterseite des Matrizendeckels 14 montiert und schliesst diesen bis zum Niveau 37 ab. Dies bedeutet, dass sich die Leitschaufel 21 mindestens bis zum normalen Niveau 37 erstrecken muss, dass sich ihre Unterkante an die Rundung des Matrizendeckels 14 anschmiegt (die aus Fig. 1 ersichtliche geschwungene Form ergibt sich nur daraus, dass die Leitschaufeln 20 und 21 zur Gänze, der Matrizendeckel 14 hingegen geschnitten dargestellt ist) und dass das der Einfüllöffnung 15 zugewandte Hinterende der Leitschaufel 21 wenigstens bis zum Niveau 37 im wesentlichen über die gesamte axiale Breite des Deckels 14 reicht. Für ihre Verteilfunktion könnte die Leitschaufel 21 auch ohne die Verlängerung 28 ausgebildet sein, doch dient die Verlängerung 28 der Sperrwirkung bei Stillstand der Pelletpresse 1, aber auch der Verhinderung des unkontrollierten Materialzustromes während des Pressenbetriebes. Dies ist mit ein Grund, warum die Leitschaufeln 20, 21, insbesondere die letztere, in der aus Fig. 3 ersichtlichen Weise ausserhalb des Innenraumes der Matrizenform 8 angeordnet sind; ein weiterer Grund liegt selbstverständlich darin, dass dieser Innenraum so wenig als möglich verbaut sein soll. Bei anderer Ausbildung und Anordnung der Leitschaufel 21 kann selbstverständlich gegebenenfalls die Verlängerung 28 entfallen. Beispielsweise könnte die Leitschaufel 21 (bezogen auf Fig. 3) derart gekrümmt ausgebildet sein, dass sich an ihrem der Matrizenform 8 zugewandten Ende der Winkel γ' ergibt, wogegen das der Einfüllöffnung 15 zugewandte Hinterende einen grösseren Winkel mit der Ebene 29 einschliesst. Es versteht sich jedoch, dass die Anbringung der Verlängerung 28 zu einer einfacheren Form, überdies aber auch zu einer besseren Leitwirkung der Schaufel 21 auch im Bereiche ihres Hinterendes führt.

Aus dieser Sperrwirkung der Leitschaufel 21 ist auch erklärlich, warum zu Beginn des Betriebes der Pelletpresse 1 das über den Einfülltrichter 16 zugeführte Material zunächst an die obere Leitschaufel 20 und dann erst an die Leitschaufel 21 gelangt. Ferner erklärt sich daraus die aus Fig. 2 ersichtliche Anordnung der Pressrollen 11, 12 unter einem Winkel δ zu einer Vertikalebene 38. Dadurch wird nämlich einerseits Platz für die Anbringung der Leitschaufel 21 im unteren Bereich geschaffen, andererseits wäre zwar eine horizontale Anordnung der durch die Achsstummel 17 verlaufenden geometrischen Achse 39 möglich, doch würde damit der jeweilige Winkelabstand α' bzw. β verringert werden. Die dargestellte Schräglage der Achse 39 bzw. ihre Winkelversetzung um den Winkel δ gegenüber der Vertikalebene 38 bringt somit in jeder Hinsicht ein Optimum, denn es wird so ein grösstmöglicher Winkelabstand α' bzw. β trotz Anordnung der Leitschaufel 21 im unteren Bereich erzielt. Dieser spitze Winkel δ liegt vorzugsweise etwa zwischen 30° und 60° und insbesondere annähernd bei 45°. Selbstverständlich mag dieser Winkel auch grösser sein, wenn man auf den Vorteil der Ausnützung der Fliehkraft für die Materialverteilung verzichtet und beispielsweise die Pressrolle 11 unmittelbar im Anschluss an die Verlängerung 28 anordnet. In diesem Falle wird man allerdings auf kompliziertere Leitschaufelformen zurückgreifen müssen.

Im Zusammenhang mit der Winkeljustiereinrichtung 33 - 36 ist selbstverständlich die Möglichkeit der Azimutverstellung durch Lösen der Schrauben 26 bzw. die Höhenverstellmöglichkeit durch Lösen der Schrauben 24 von besonderem Vorteil. Bei Verwendung eines einzigen Durchmessers für die angewandten Matrizenformen 8 könnte es sogar sinnvoll sein, die Justiereinrichtungen derart zu kombinieren, dass bei Verstellung des Winkels γ bzw. γ' automatisch auch der Azimutwinkel, d. h. der Winkel der Stangen 22 zur Vertikalen (bezogen auf Fig. 1), entsprechend angepasst wird. Ferner können die gezeigten Justiereinrichtungen verschieden ausgebildet sein, insbesondere kann die Stange 22 (Fig. 1, 2) auch die Funktion der Welle 33 übernehmen.

Wenn es auch bevorzugt ist, dass die Leitschaufeln 20, 21 in der aus Fig. 3 ersichtlichen Weise ausserhalb des Innenraumes der Matrizenform 8 angeordnet sind, so kann es sich bei anderen Konstruktionen ergeben, dass wenigstens eine der Schaufeln geringfügig in diesen Innenraum ragt. Dies ist ja immerhin auch beim Vorderende der Leitschaufel 20 der Fall, wobei eine Vergrösserung ihres Winkels γ dazu führt, dass dieses Ende noch weiter in den Innenraum der Matrize 8 vorragt. Es ist jedoch zweckmässig, die Leitschaufeln nicht mehr als über ein Drittel der axialen Breite der Matrizenform 8 in das Innere ragen zu lassen, einerseits um diesen Raum von Bauteilen freizuhalten, andererseits weil sonst die Verteilung des Materiales durch Fliehkraftwirkung erschwert wird. Falls man sich jedoch nicht davor scheut, zusätzliche Bauteile im Inneren der Matrizenform 8 Unterzubringen, so könnte in dem geschaffenen Freiraum α' bzw. β (vgl. Fig. 2) auch eine Verteileinrichtung (Rakeln, Verteilerrollen od. dgl.) angeordnet sein; es versteht sich jedoch, dass auf solche Bauteile verzichtet werden kann und die Ausnützung der Fliehkraft günstiger ist. Es ist somit bevorzugt, wenn dieser Freiraum keinerlei Bauteile aufweist.

Wenn oben bemerkt wurde, dass für eine gute Verteilerfunktion sowohl die Umfangsgeschwindigkeit an der Innenseite 8a der Matrizenform 8 als auch die Winkel γ bzw. γ' wichtige Parameter darstellen, so bleibt zu erwähnen, dass zwischen diesen beiden Parametern günstigerweise bestimmte Verhältnisse einzuhalten sind. Geht man davon aus, dass der Winkel γ bzw. γ' in Graden (d. h. zu 360° für den vollen Kreis) und die Umfangsgeschwindigkeit in m/sec gemessen wird, so wurden optimale Verhältnisse zwischen 3,4 : 1 und 4,4 : 1, insbesondere zwischen 3,8 : 1 und 4,0 : 1 gefunden. Es ist daraus ersichtlich, dass diese Verhältnisse zweckmässig innerhalb eines engen, sich teilweise nicht einmal durch eine ganze Zahl unterscheidenden Verhältniszahl gegeben sind. In der Praxis wurde dann auch gefunden, dass für die Erzeugung von Futterpellets ein Optimum bei 3,86 : 1 liegt. Selbstverständlich ist die vorliegende Pelletpresse aber auch für andere Materialien einsetzbar, beispielsweise zur Verarbeitung von Müll zu Brennstoff, wobei sich andere Verhältniszahlen ergeben mögen.

Im Rahmen der Erfindung sind zahlreiche Abänderungen möglich, beispielsweise können die verschiedenen dargestellten Justiereinrichtungen anders ausgebildet sein oder auch für eine der Leitschaufeln oder beide wegfallen.

## Patentansprüche

1. Pelletpresse mit einer im wesentlichen zylindrischen Matrizenform, die mit Hilfe eines Antriebes drehbar ist und an deren Innenseite wenigstens eine Pressrolle anliegt, der das zu pelletisierende Material mit Hilfe einer - gesehen in Drehrichtung der Matrizenform - davor, schräg zur Matrizenachse liegenden Leitschaufel, zuführbar ist, dadurch gekennzeichnet, dass die bzw. eine Leitschaufel (21) im Bereiche der Unterseite der Matrizenform (8) mit vertikaler Mittelebene (29) angeordnet ist, und quer - bis wenigstens zur Höhe des Normalniveaus (37) des zugeführten Materials sich erstreckend - verlängert ist, vorzugsweise eine aus ihrer Ebene abgewinkelte - insbesondere sich parallel zur Mittelebene (29) der Matrizenform (8) erstreckende - Verlängerung (28) aufweist, wobei die Materialzufuhr bei stillstehender Matrizenform (8) gesperrt ist, bei drehender Matrizenform (8) und mitdrehender Zufuhrkammer bzw. mitdrehendem Matrizendeckel (14) hingegen das Material durch Zufuhrkammer bzw. Matrizendeckel (14) mitnehmbar und der schrägen Leitschaufel (21) zuführbar ist.

2. Pelletpresse nach Anspruch 1, dadurch gekennzeichnet, dass die der bzw. einer Pressrolle (11 bzw. 12) bzw. der Matrizenform (8) zugewandte Vorderkante der Leitschaufel (20 bzw. 21) von jenem Punkt, in dem die Pressrolle (11 bzw. 12) an der Innenwandfläche (8a) der Matrizenform (8) anliegt, in einem Winkelabstand (beta) liegt, der mindestens 45° beträgt, wobei zwischen Leitschaufel und der zugehörigen Pressrolle ein Freiraum von wenigstens 45° vorgesehen ist, und dass diese Leitschaufel (20 bzw. 21) bevorzugt, wenigstens 90° vor der Pressrolle (12 bzw. 11), insbesondere unmittelbar nach der vorhergehenden Pressrolle (11 bzw. 12) - gesehen in Drehrichtung der Matrizenform (8) - angeordnet ist.

3. Pelletpresse nach Anspruch 1 oder 2, dadurch gekennzeichnet, dass sich die Leitschaufel (20 bzw. 21) nur bis maximal zu einem Drittel in Achsrichtung der Matrizenform (8) in diese hineinerstreckt, gegebenenfalls sogar ausserhalb derselben an sie anschliesst.

4. Pelletpresse nach Anspruch 1, 2 oder 3, dadurch gekennzeichnet, dass die Matrizenform (8) - gemessen an ihrer Innenseite (8a) - mittels ihres Antriebes mit einer Umfangsgeschwindigkeit von wenigstens 3 m/sec, vorzugsweise mindestens 5 m/sec, insbesondere 7 m/sec, antreibbar ist.

5. Pelletpresse nach einem der Ansprüche 1 bis 4, dadurch gekennzeichnet, dass der Winkel (γ, γ') der Ebene der Leitschaufel (20 bzw. 21) zur Mittelebene (29) der Matrizenform (8) zwischen 20° und 40°, vorzugsweise zwischen 25° und 30°, insbesondere um 27°, beträgt.

6. Pelletpresse nach einem der Ansprüche 1 bis 5, dadurch gekennzeichnet, dass der Winkel (γ, γ') der Ebene der Leitschaufel (20, 21) zur Mittelebene (29) der Matrizenform (8) mit Hilfe einer Winkeljustiereinrichtung (33 - 36) einstellbar ist, und dass vorzugsweise eine Begrenzungseinrichtung (34 - 36) für wenigstens eine Einstellgrenze, insbesondere wenigstens ein Begrenzungsanschlag (36) vorgesehen ist.

7. Pelletpresse nach einem der Ansprüche 1 bis 6, dadurch gekennzeichnet, dass das Verhältnis des Winkels (γ, γ') - gemessen in Grad, den die Ebene der Leitschaufel (20, 21) mit der Mittelebene (29) der Matrizenform (8) einschliesst, zur Umfangsgeschwindigkeit der Matrizenform (8) in m/sec an ihrer Innenseite (8a) zwischen 3,4 : 1 und 4,4 : 1, vorzugsweise zwischen 3,8 : 1 und 4,0 : 1, insbesondere bei 3,86: 1, liegt.

8. Pelletpresse nach einem der Ansprüche 1 bis 7, dadurch gekennzeichnet, dass die bzw. eine Pressrolle (11 bzw. 12) bezüglich einer Vertikalebene (38) durch die Matrizenachse in einem spitzen Winkel (γ), vorzugsweise von etwa 30° bis 60°, insbesondere von annähernd 45°, angeordnet ist.

9. Pelletpresse nach einem der Ansprüche 1 bis 8, dadurch gekennzeichnet, dass für zumindest eine Leitschaufel (20 bzw. 21) wenigstens eine Justiereinrichtung (22 - 24, 25, 26) für den Abstand der Leitschaufel (20 bzw. 21) von der Matrizeninnenwand (8a) bzw. für ihren Azimutwinkel zu dieser Wand (8a) vorgesehen ist.

**Claims**

1. Pellet press with an essentially cylindrical die which is rotatable by means of a drive and against the inner face of which rests at least one press roller, to which the material to be pelletised can be fed by means of a guide blade located in front of the press roller, as seen in the direction of rotation of the die, and arranged obliquely relative to the die axis, characterized in that the or a guide blade (21) is arranged in the region of the underside of the die (8) with a vertical mid-plane (29) and is extended transversely, running at least up to the height of the normal level (37) of the material supplied, preferably has an exsersion (28) angled out of its plane, especially running parallel to the mid-plane (29) of the die (8), the supply of material being blocked when the die (8) is stationary, whereas, when the die (8) rotates and the feed chamber co-rotates or the die cover (14) co-rotates, the material can be taken up by the feed chamber or die cover (14) and fed to the oblique guide blade (21).

2. Pellet press according to Claim 1, characterized in that the front edge, facing the or a press roller (11 or 12) or the die (8), of the guide blade (20 or 21) is at an angular distance (beta) amounting to at least 45° from that point at which the press roller (11 or 12) rests against the inner wall face (8a) of the die (8), a free space of at least 45° being provided between guide blade and the associated press roller, and in that this guide blade (20 or 21) is preferably arranged at least 90° in front of the press roller (12 or 11), especially immediately after the preceding press roller (11 or 12), as seen in the direction of rotation of the die (8).

3. Pellet press according to Claim 1 or 2, characterized in that the guide blade (20 or 21) extends only up to at most one third into the die (8) in the axial direction of the latter, if appropriate even coming adjacent to the latter outside it.

4. Pellet press according to Claim 1, 2 or 3, characterized in that the die (8) can be driven by means of its drive at a circumferential speed of at least 3 m/sec, preferably at least 5 m/sec, especially 7 m/sec, as measured on its inner face (8a).

5. Pellet press according to one of Claims 1 to 4, characterized in that the angle ($\gamma$, $\gamma'$) of the plane of the guide blade (20 or 21) relative to the mid-plane (29) of the die (8) amounts to between 20° and 40°, preferably between 25° and 30°, especially around 27°.

6. Pellet press according to one of Claims 1 to 5, characterized in that the angle ($\gamma$, $\gamma'$) of the plane of the guide blade (20, 21) relative to the mid-plane (29) of the die (8) is adjustable by means of an angle-adjusting device (33 - 36), and in that preferably a limiting device (34 - 36) is provided for at least one adjustment limit, especially at least one limiting stop (36).

7. Pellet press according to one of Claims 1 to 6, characterized in that the ratio of the angle ($\gamma$, $\gamma'$), measured in degrees, formed by the plane of the guide blade (20, 21) with the mid-plane (29) of the die (8), to the circumferential speed of the die (8) in m/sec on the inner face (8a) of the latter is between 3.4 : 1 and 4.4 : 1, preferably between 3.8: 1 and 4.0 : 1, especially around 3.86 : 1.

8. Pellet press according to one of Claims 1 to 7, characterized in that the or a press roller (11 or 12) is arranged at an acute angle ($\gamma$), preferably of approximately 30° to 60°, especially approximately 45°, relative to a vertical plane (38) through the die axis.

9. Pellet press according to one of Claims 1 to 8, characterized in that for at least one guide blade (20 or 21) at least one adjusting device (22 - 24, 25, 26) is provided for the distance between the guide blade (20 or 21) and the die inner wall (8a) or for its azimuth angle relative to this wall (8a).

**Revendications**

1. Presse à former des granulés comportant une matrice en substance cylindrique, qui peut tourner à l'intervention d'une commande et à la face interne de laquelle s'applique au moins un rouleau de pression, auquel la matière à laquelle doit être donnée la forme de granulés peut être amenée au moyen d'une aube de guidage qui - vue dans le sens de rotation de la matrice - se trouve à l'avant du rouleau de pression, en oblique par rapport à l'axe de la matrice, la presse étant caractérisée en ce que l'aube de guidage ou une aube de guidage (21) est prévue dans la zone de la face inférieure de la matrice (8) à plan médian vertical (29) et - s'étendant au moins jusqu'à hauteur du niveau normal (37) de la matière amenée - est prolongée transversalement et présente avantageusement un prolongement (28) qui est coudé en dehors de son plan - prolongement qui, en particulier, s'étend parallèlement au plan médian (29) de la matrice (8) - l'amenée de la matière étant bloquée lorsque la matrice (8) est à l'arrêt, tandis que lorsque la matrice (8) tourne et que la chambre d'amenée ou la couverture (14) de la matrice tourne avec celle-ci, la matière peut être entraînée par la chambre d'amenée ou par la couverture (14) de la matrice et être amenée à l'aube de guidage en oblique (21).

2. Presse à former des granulés suivant la revendication 1, caractérisée en ce que le bord antérieur de l'aube de guidage (20 ou 21) qui est dirigé vers le rouleau de pression ou vers un rouleau de pression (11 ou 12) ou vers la matrice (8) se trouve, à partir du point où le rouleau de pression (11 ou 12) s'applique à la face interne (8a) de la paroi de la matrice (8), à un angle d'écartement (bêta) qui est d'au moins 45°, un espace libre d'au moins 45° étant ainsi prévu entre l'aube de guidage et le rouleau de pression correspondant, et en ce que cette aube de guidage (20 ou 21) est - vue dans le sens de rotation de la matrice (8) - avantageusement prévue d'au moins 90° à l'avant du rouleau de pression (12 ou 11), en particulier immédiatement à la suite du rouleau de pression qui précède (11 ou 12).

3. Presse à former des granulés suivant l'une ou l'autre des revendications 1 et 2, caractérisée en ce que l'aube de guidage (20 ou 21) ne s'avance à l'intérieur de la matrice qu'au maximum sur un tiers de la largeur axiale de la matrice (8) et rejoint même éventuellement la matrice à l'extérieur de celle-ci.

4. Presse à former des granulés suivant l'une quelconque des revendications 1, 2 et 3, caractérisée en ce que la matrice (8) peut être commandée par sa commande à une vitesse périphérique qui - mesurée à sa face interne (8a) - soit d'au moins 3 m/sec, avantageusement d'au moins 5 m/sec et, en particulier, de 7 m/sec.

5. Presse à former des granulés suivant l'une quelconque des revendications 1 à 4, caractérisée en ce que l'angle ($\gamma$, $\gamma'$) formé par le plan de l'aube de guidage (20 ou 21) par rapport au plan médian (29) de la matrice (8) est compris entre 20° et 40°, avantageusement entre 25° et 30°, et est en particulier d'environ 27°.

6. Presse à former des granulés suivant l'une quelconque des revendications 1 à 5, caractérisée en ce que l'angle ($\gamma$, $\gamma'$) formé par le plan de l'aube (20 ou 21) par rapport au plan médian (29) de la matrice (8) peut être réglé au moyen d'un appareil de mise au point angulaire (33 - 36), et en ce qu'il est avantageusement prévu un moyen de limitation (34 - 36) pour au moins une limite de réglage, en particulier au moins un arrêt de limitation (36).

7. Presse à former des granulés suivant l'une quelconque des revendications 1 à 6, caractérisée en ce que le rapport entre l'angle (γ, γ') mesuré en degrés - que le plan de l'aube de guidage (20 ou 21) forme avec le plan médian (29) de la matrice (8), et la vitesse périphérique de la matrice (8) en m/sec à la face interne (8a) de la paroi de la matrice, est compris entre 3,4/1 et 4,4/1, avantageusement entre 3,8/1 et 4,0/1 et est, en particulier, de 3,86/1.

8. Presse à former des granulés suivant l'une quelconque des revendications 1 à 7, caractérisée en ce que le rouleau de pression ou un rouleau de pression (11 ou 12) est prévu, par rapport à un plan vertical (38) passant par l'axe de la matrice, à un angle aigu (γ), qui est avantageusement d'environ 30° à 60° et qui, en particulier, se rapproche de 45°.

9. Presse à former des granulés suivant l'une quelconque des revendications 1 à 8, caractérisée en ce que pour au moins une aube de guidage (20 ou 21), il est prévu au moins un appareil de mise au point (22 - 24, 25, 26) pour la distance qui sépare l'aube de guidage (20 ou 21) de la face interne (8a) de la paroi de la matrice ou pour son angle d'azimut par rapport à cette face interne (8a) de la paroi.

Fig. 1

Fig. 2

# Fig.3

0 172 359